# EUROPEAN PATENT APPLICATION

(11) **EP 2 594 978 A1**
(43) Date of publication of application: **22.05.2013**
(21) Application number: 11189997.7
(22) Date of filing: 21.11.2011
(51) Int. Cl.: G02B 17/08, F21V 5/04

(54) **Reflective unit and light source module having the same**

(71) Applicant: Ecolighting, Inc. Corp, New Taipei City 231 (TW)
(72) Inventor: Chuang, Shih-Jen, New Taipei City (TW); Chang, Han-Chi, New Taipei City (TW); Tsai, Dien-Jen, New Taipei City (TW)
(74) Representative: 2K Patentanwälte Blasberg Kewitz & Reichel

(57) **Abstract**

A reflective unit (16, 26, 26a) for using with a light guiding element (14, 24, 24a) is disclosed. The light guiding element (14, 24, 24a) includes a light entrance portion (144, 244) and a light exit portion (148, 248, 248a). The light exit portion (148, 248, 248a) has a first concave portion (1482, 2482, 2482a) dented toward the light entrance portion (144, 244). The reflective unit (16, 26, 26a) includes a fixing member (162, 262, 262a) and a reflective member (164, 264). The fixing member (162, 262, 262a) is arranged around the perimeter of the upper end of the light exit portion (148, 248, 248a). The reflective member (164, 264) is arranged on the fixing member (162, 264, 262a) for covering the first concave portion (1482, 2482, 2482a) and forming a conical-shaped light propagating space (19, 29).

## Description

### BACKGROUND OF THE INVENTION

### 1. Field of the Invention

The present invention relates to a light source module, in particularly to a light source module using light emitting diode.

### 2. Description of Related Art

Light emitting diode (LED) is a semiconductor device, which utilizes compound semiconductor for converting electrical energy to photonic energy as to achieve illuminating purposes. Since the LED has advantages including long life time, high stability, and low power consumption, it has been replacing traditional non-directional light source like light bulb and fluorescent tube and has been widely used in indoor, outdoor and mobile illuminating applications.

Since the LED is a point light source with high directionality, the illuminated area thereof is smaller than that of conventional light sources. So the LED is preferably for being used on illuminating applications like desk lamps for illuminating short-distance and small-area objects.

In order to expand the use of the LED into various applications like light bulbs or candle lights, a lighting module having multiple LEDs can provide higher intensity for solving the problem that each light emitting diode only has limited light intensity. However, the lighting module having multiple LEDs will consequently increase the electrical power consumption and will not get any benefit of power saving. Besides, the cost of the LEDs lighting module is much more than conventional lighting module, thus user will be less willing to adopt the LEDs lighting module.

### SUMMARY OF THE INVENTION

Accordingly, the objective of the present invention is to provide a reflective unit for using with a light guiding element. The reflective unit is used for reflecting light emitted from a light emitting element and passing through a light guiding element, and thus changes the intensity distribution of the light.

Another objective of the present invention is to provide a light source module capable of expanding the illuminating angular range of the light source module.

For achieving the above objective, the present invention provides a reflective unit for using with a light guiding element. The light guiding element includes a light entrance portion and a light exit portion having a first concave portion dented toward the light entrance portion. The reflective unit includes a fixing member and a reflective member. The fixing member is arranged around the perimeter of the upper end of the light exit portion. The reflective member is arranged on the fixing member for covering the first concave portion and forming a conical-shaped light propagating space.

The present invention also provides a light source module including a light guiding element, at least one light emitting element and a reflective unit. The light guiding element includes a light guiding portion, a light entrance portion connecting to a side of the light guiding portion and a light exit portion connecting to another side of the light guiding portion. The light exit portion has a plane and a first concave portion dented from the center of the plane toward the light guiding portion. The light emitting element is arranged at the light entrance portion. The reflective unit includes a fixing member and a reflective member. The fixing member is arranged around the perimeter of the upper end of the light exit portion. The reflective member is arranged on the fixing member for covering the first concave portion and forming a conical-shaped light propagating space.

The present invention arranges the fixing member on the perimeter of the upper end of the light exit portion and arranges the reflective member on the fixing member. The size of the contacting area between the reflective member and the light guiding element can be increased, so as to prevent the reflective member from being detached from the light guiding element.

### BRIEF DESCRIPTION OF THE DRAWINGS

FIG. 1 is a perspective view of a light source module according to the first embodiment of the present invention.
FIG. 2 is a cross sectional view of the light source module according to the first embodiment of the present invention.
FIG. 3 is another perspective view of the light source module according to the first embodiment of the present invention.
FIG. 4 is a light distribution diagram of the light passing through the light guiding element.
FIG. 5 is a light distribution diagram of the light passing through the light source module.
FIG. 6 is a perspective view of a light source module according to the second embodiment of the present invention.
FIG. 7 is a cross sectional view of a light source module according to the third embodiment of the present invention.
FIG. 8 is a perspective view of a light source module according to the fourth embodiment of the present invention.

### DETAILED DESCRIPTION OF THE INVENTION

The objectives, features and advantages of the present invention will be described in detail with reference to the accompanying embodiments for better understanding. In the accompanying drawings, it should be noted that the like reference numerals designate like elements throughout the specification.

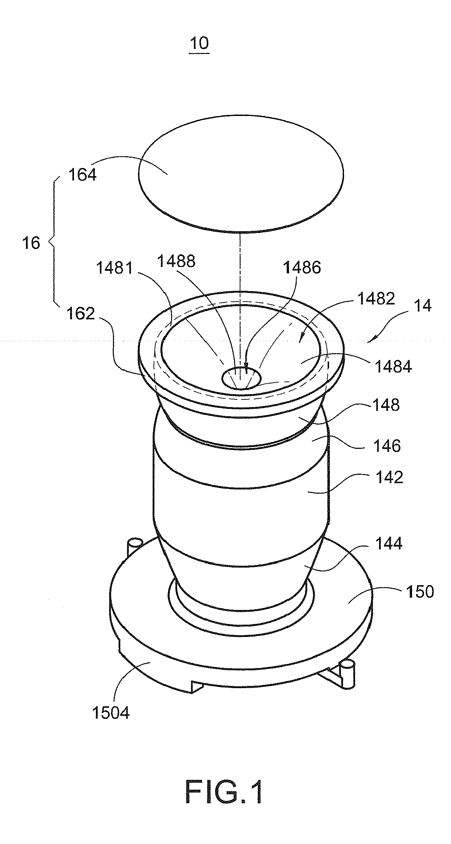

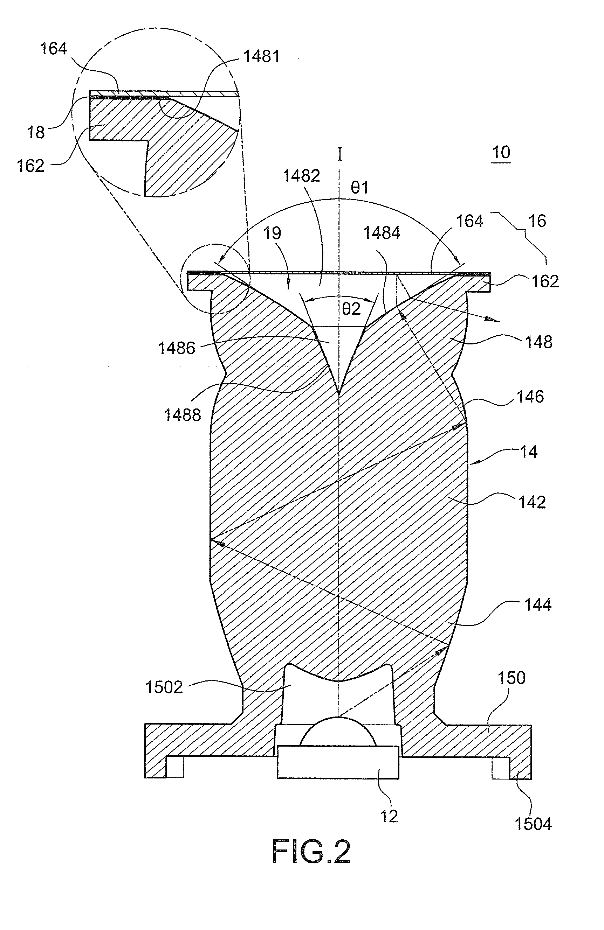

FIG. 1 and FIG. 2 show a light source module according to the first embodiment of the present invention. The light source module 10 includes at least one light emitting element 12, a light guiding element 14 and a reflective unit 16. The light emitting element 12 has an optical axis I and is used as light source of the light source module 10 for providing light beam while the light source module 10 is turned on. The number of the light emitting element 12 can be one or more. In this embodiment, the number is one for illustration. The light emitting element 12 can be a light emitting diode or a multi-chip LED package. Preferably, the light emitting element 12 is a high power LED or high power multi-chip LED package.

The light guiding element 14 is arranged on the light emitting element 12. The light guiding element 14 is axially symmetric about its own axis, which is coincided with the optical axis I. The light guiding element 14 has a light guiding portion 142, a light entrance portion 144, a converging portion 146 and a light exit portion 148. The light guiding element 14 can be made of transparent material such as PMMA, acryl, PC, PET, polyolefins, synthesis resin or glass. The manufacturing method of the light guiding element 14 includes injection molding, etching, thermal pressing or cutting. The transparent material can be transparent or opaque for passing through at least a part or all of the light emitted from the light emitting element 12. Besides, one or more color dyes can be added in the transparent material for converting the color of the light passing through the light guiding element 14.

The light guiding portion 142 is substantially, but not limited to, cylindrical shaped. The light entrance portion 144 is connected to a side of the light guiding portion 142. The light emitting element 12 is arranged at the light entrance portion 144 and emits light toward the light entrance portion 144. The diameter of the light entrance portion 144 decreases as the distance from the light guiding portion 142. Consequently, the ratio of light in the light entrance portion 144 experiencing the total internal reflection increases, the ratio of light propagating to the light guiding portion 142 increases as well.

The converging portion 146 is connected to a side of the light guiding portion 142 and opposite to the light entrance portion 144. The diameter of the converging portion 146 decreases as the distance from the light guiding portion 142 increases.

The light exit portion 148 is connected to a side of the light guiding portion 142 and opposite to the light entrance portion 144. The diameter of the light exit portion 148 increases as the distance from the converging portion 146 increases. The end of light exit portion 148 has a plane 1481 and a first concave portion 1482. The first concave portion 1482 is dented from the center of the plane 1481 toward the light entrance portion 144. A first light exit surface 1484 is defined by the first concave portion 1482 and the light exit portion 148. A second concave portion 1486 is formed at the center of the first concave portion 1482. A second light exit surface 1488 is defined by the second concave portion 1486 and the light exit portion 148. The concave angle θ2 of the second concave portion 1486 is smaller than the concave angle θ1 of the first concave portion 1482.

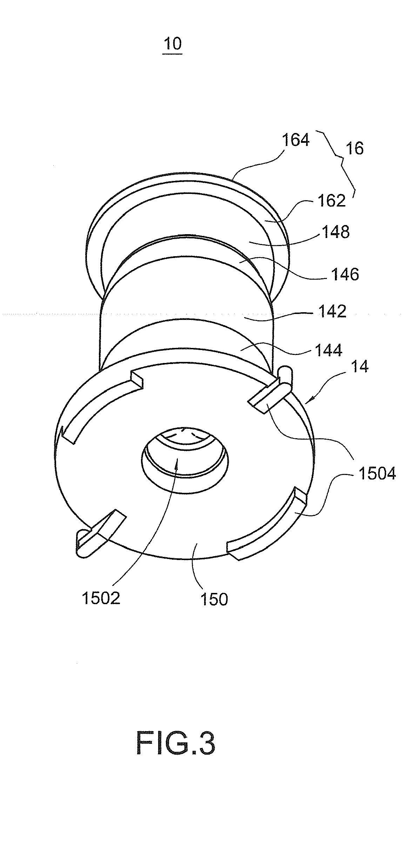

The light guiding element 14 further includes a bottom portion 150 connected to a side of the light entrance portion 144 and opposite to the light guiding portion 142. An accommodating recess 1502 is indented from the bottom portion 150 toward the light exit portion 148. A light entrance surface is defined by the light entrance portion 144 and the accommodating recess 1502. The light entrance surface is indented toward the bottom portion 150, or in another word, the light entrance surface is indented away from the light exit portion 148. Consequently, the light incident from the light entrance surface can be converged. The light emitting element 12 is arranged in the accommodating recess 1502 and emits light toward the light entrance surface. The bottom portion 150 has a plurality of the support members 1504. As FIG. 3 shows, the support members 1504 are arranged on the bottom portion 150 at equal intervals for supporting the light guiding element 14 above the light emitting element 12 to avoid damage to the light emitting element 12.

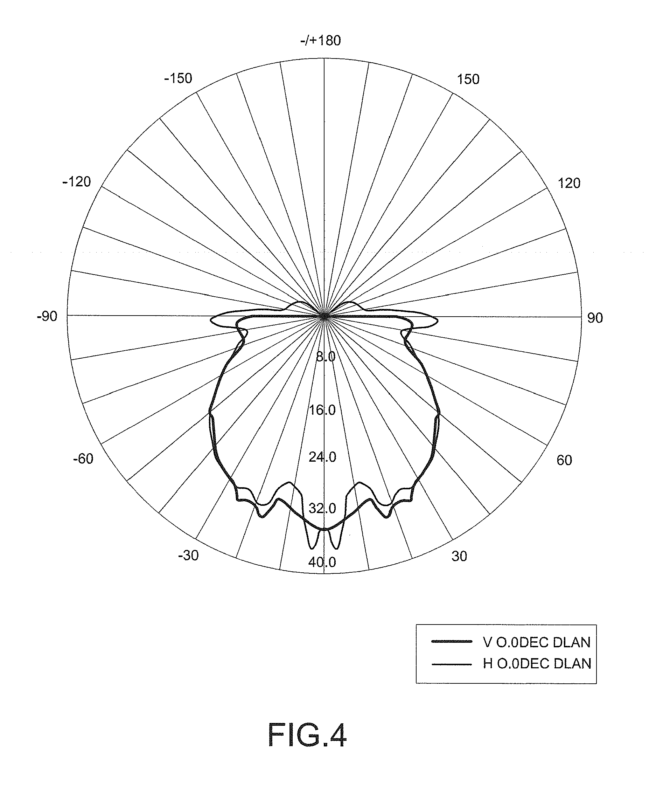

The light emitted from the light emitting element 12 is incident into the light guiding element 14 through the light entrance surface. Most of the light in the light entrance portion 144 can propagate to the light guiding portion 142 through total internal reflection. The light then is guided by the light guiding portion 142 to the converging portion 146. The converging portion 146 can reflect a part of the light to the first light exit surface 1484 and the second exit surface 1488. Then the light can exit from the first light exit surface 1484 and the second exit surface 1488. The intensity distribution of the light passing through the light guiding element is shown as FIG. 4. The longitudinal intensity distribution is represented by a thicker line, while the transverse intensity distribution is represented by a thinner line.

As FIG. 1 and FIG.2 show, the reflective unit 16 includes a fixing member 162 and a reflective member 164. The fixing member 162 is arranged on the perimeter of the upper end of the light exit portion 148. In this embodiment, the fixing member 162 includes a ring-shaped protrusion. The fixing member 162 can be transparent material such as PMMA, acryl, PC, PET, polyolefins, synthesis resin or glass. In this embodiment, the fixing member 162 and the light guiding element 14 are one piece formed. Alternatively, the fixing member 162 can be attached to the perimeter of the upped end of the light exit portion 148 by adhesive material.

The reflective member 164 is arranged on the fixing member 162 for covering the first concave portion 1482 and the second concave portion 1486. A conical-shaped light propagating space 19 filled with air is formed between the reflective member 164 and the light guiding element 14. The light emitted out from the first light exit surface 1484 or the second light exit surface 1488 propagates through the light propagating space 19 to the reflective member 164. Then the reflective member 164 reflects back the light into the first exit surface 1484 or the second exit surface 1488. Finally the light will exit from the outer peripheral surface of the light exit portion 148.

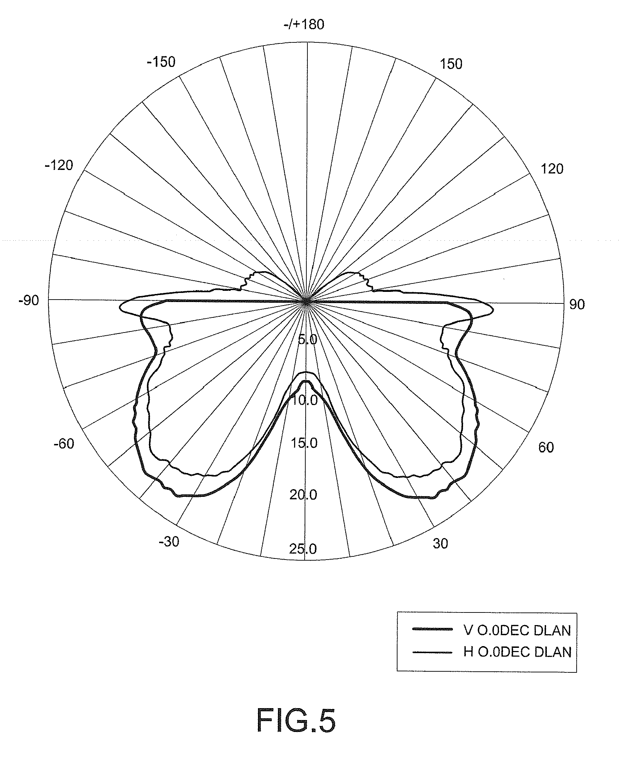

The direction of the light emitted out from the first exit surface 1484 or the second exit surface 1488 and the direction of the light emitted back into the first exit surface 1484 or the second exit surface 1488 forms an acute angle. Therefore, the divergence angle of the light is widened, and the total illuminating angular range of the light source module 10 can be expanded. The expanded intensity distribution of the light source module 10 is shown in FIG.5.

The reflective member 164 can be a reflector, a filter, or a plastic or glass plate coated with resin. The filter can be a reflective filter. The resin can be colors with better reflective effect such as white or silver. In practical use, the color of the reflective member 164 may be adjustable varied according to actual circumstance or limitation.

In addition, an adhesive material 18 can be arranged between the reflective member 164 and the fixing member 162 for attaching the reflective member 164 onto the fixing member 162. Preferably, the adhesive material 18 is a double-sided tape.

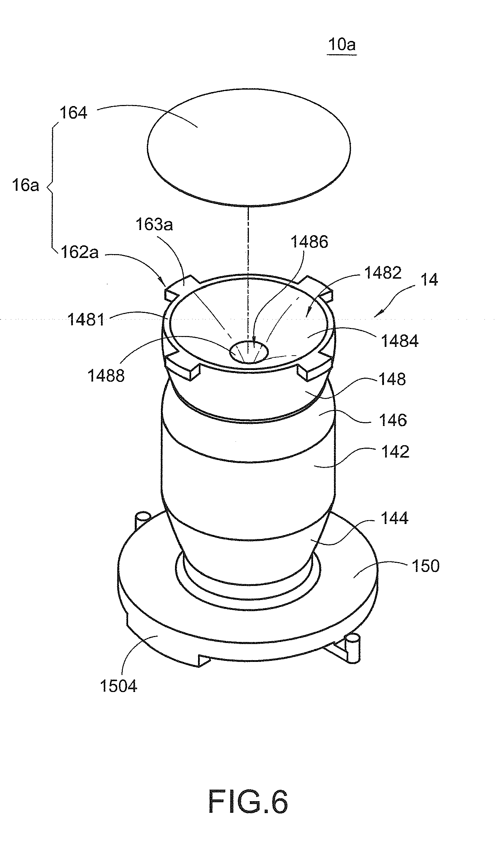

FIG. 6 shows a light source module according to the second embodiment of the present invention. The light source module 10a of the present embodiment is substantially the same as the first embodiment. The difference is that the fixing member 162a includes at least four protrusions 163a arranged on the perimeter of the upper end of the light exit portion 148 at equal intervals. In this embodiment, the protrusions 163a are attached onto the perimeter of the upper end of the light exit portion 148 through adhesive material (not shown). Alternatively, the protrusions 163a and the light guiding element 14 are one piece formed.

The reflective member 164 can be attached onto the protrusions 163a by adhesive material and cover the first concave portion 1482 and the second concave portion 1486. A conical shaped light propagating space 19 filled with air is formed between the light guiding element 14 and the reflective member 164. Therefore, the total illuminating angular range of the light source module 20a can be expanded. Besides, the protrusions 163a can prevent the reflective member 164 from being detached from the light guiding element 14. That can improve the yield rate of the attaching of reflective member 164.

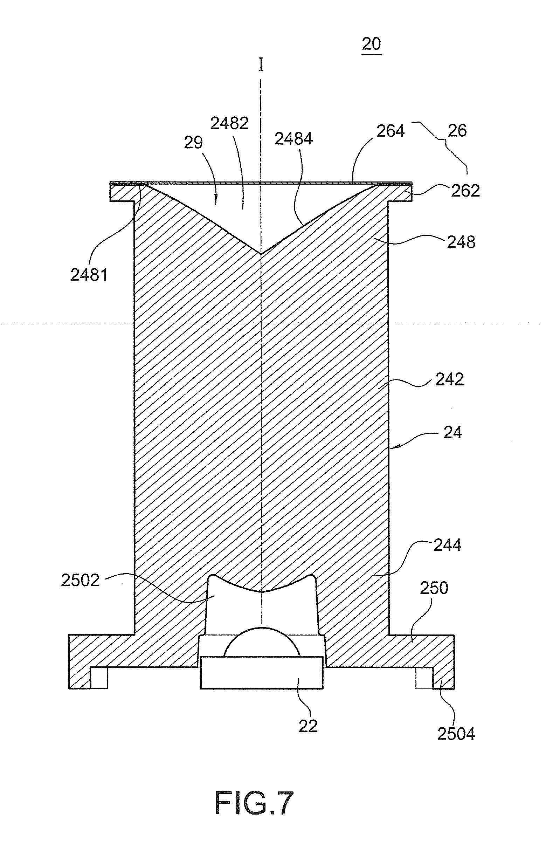

FIG. 7 shows a light source module according to the third embodiment of the present invention. The light source module 20 includes at least one light emitting element 22, a light guiding element 24 and a reflective unit 26. The light emitting element 22 has a optical axis I and is used as light source of the light source module 20 for providing light beam while the light source module 20 is turned on. The number of the light emitting element 22 can be one or more. In this embodiment, the number is one for illustration. The light emitting element 22 can be a light emitting diode or a multi-chip LED package. Preferably, the light emitting element 22 is a high power LED or high power multi-chip LED package.

The light guiding element 24 is arranged on the light emitting element 22. The light guiding element 24 is substantially, but not limited to, cylindrical shaped. The light guiding element 24 can be made of transparent material such as PMMA, acryl, PC, PET, polyolefins, synthesis resin or glass. The manufacturing method of the light guiding element 24 includes injection molding, etching, thermal pressing or cutting. The transparent material can be transparent or opaque for passing through at least a part or all of the light emitted from the light emitting element 22. Besides, one or more color dyes can be added in the transparent material for converting the color of the light passing through the light guiding element 24.

The light guiding element 24 has a light guiding portion 242, a light entrance portion 244, a light exit portion 248 and a bottom portion 250. The light entrance portion 244 and the light exit portion 248 are respectively connected to two sides of the light guiding portion 242.

The end of light exit portion 248 has a plane 2481 and a first concave portion 2482. The first concave portion 2482 is dented from the plane 2481 toward the light entrance portion 244 and forms a first light exit surface 2484. In this embodiment, the first concave portion 2482 is preferably of a conical shape.

The bottom portion 250 is connected to a side of the light entrance portion 244 and opposite to the light guiding portion 242. An accommodating recess 2502 is indented from the bottom portion 250 toward the light exit portion 248. The light emitting element 22 is arranged in the accommodating recess 2502. The bottom portion 250 has a plurality of the support members 2504. The support members 2504 are arranged on the bottom portion 250 at equal intervals for supporting the light guiding element 24 above the light emitting element 22 to avoid damage to the light emitting element 22.

The reflective unit 26 includes a fixing member 262 and a reflective member 264. The fixing member 262 is arranged on the perimeter of the upper end of the light exit portion 248. In this embodiment, the fixing member 262 includes a ring-shaped protrusion. The fixing member 262 can be transparent material such as PMMA, acryl, PC, PET, polyolefins, synthesis resin or glass. In this embodiment, the fixing member 262 and the light guiding element 24 are one piece formed. Alternatively, the fixing member 262 can be attached to the perimeter of the upped end of the light exit portion 248 by adhesive material.

The reflective member 264 is arranged on the fixing member 262 for covering the first concave portion 2482. A conical-shaped light propagating space 29 filled with air is formed between the reflective member 264 and the light guiding element 24. The reflective member 264 can be a metal plate, a filter, or a plastic or glass plate coated with resin. The filter can be a reflective filter. The resin can be colors with better reflective effect such as white or silver. In practical use, the color of the reflective member 264 may be adjustable varied according to actual circumstance or limitation. Therefore, the size of the contacting area between the reflective member 264 and the light guiding element 24 can be increased, so as to prevent the reflective member 264 from being detached from the light guiding element 14.

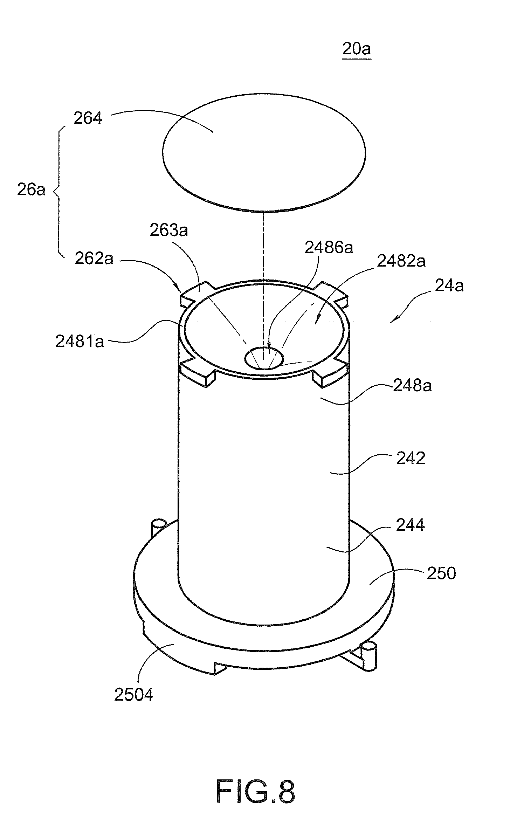

FIG. 8 shows a light source module according to the fourth embodiment of the present invention. The present embodiment is substantially the same as the third embodiment. The difference is that the light exit portion 248a of the light guiding element 24a and the fixing member 264a of the reflective unit 26a are modified. A second concave portion 2486a is formed at the center of the first concave portion 2482a. The concave angle of the second concave portion 2486a is smaller than the concave angle of the first concave portion 2482a.

The fixing member 262a includes at least four protrusions 263a arranged on the perimeter of the upper end of the light exit portion 248a at equal intervals. In this embodiment, the protrusions 263a are attached onto the perimeter of the upper end of the light exit portion 248 through adhesive material (not shown). Alternatively, the protrusions 263a and the light guiding element 24a are one piece formed.

The reflective member 264 is arranged on the protrusions 263a through an adhesive material (not shown) for covering the first concave portion 2482a and the second concave portion 2486a. A conical-shaped light propagating space filled with air is formed between the reflective member 264 and the light guiding element 24a. Therefore, the size of the contacting area between the reflective member 264 and the light guiding element 24a can be increased, so as to prevent the reflective member 264 from being detached from the light guiding element 24a. That can improve the yield rate of the attaching of reflective member 264.

In conclusion, the present invention arranges the fixing member on the perimeter of the upper end of the light exit portion and arranges the reflective member on the fixing member. The size of the contacting area between the reflective member and the light guiding element can be increased, so as to prevent the reflective member from being detached from the light guiding element. The conical shaped light propagating space formed between the light guiding element and the reflective member can expand the total illuminating angular range of the light source module, so as to be used in various applications like light bulbs or candle lights.

Although the present invention has been described with reference to the foregoing preferred embodiments, it will be understood that the invention is not limited to the details thereof. Various equivalent variations and modifications can still occur to those skilled in this art in view of the teachings of the present invention. Thus, all such variations and equivalent modifications are also embraced within the scope of the invention as defined in the appended claims.

## Claims

1. A reflective unit (16, 26, 26a) for using with a light guiding element (14, 24, 24a), the light guiding element (14, 24, 24a) comprising a light entrance portion (144, 244) and a light exit portion (148, 248, 248a) having a first concave portion (1482, 2482, 2482a) dented toward the light entrance portion (144, 244), the reflective unit (16, 26, 26a) comprising:
a fixing member (162, 262, 262a) arranged around the perimeter of the upper end of the light exit portion (148, 248, 248a)
a reflective member (164, 264) arranged on the fixing member (162, 264, 262a) for covering the first concave portion (1482, 2482, 2482a) and forming a conical-shaped light propagating space (19, 29).

2. The reflective unit as claimed in claim 1, wherein the fixing member (162, 262) comprises at least four protrusions (163a, 263a) arranged on the perimeter of the upper end of light exit portion (148, 248, 248a) at equal intervals.

3. The reflective unit as claimed in claim 1, wherein the fixing member (162, 262, 262a) is a ring-shaped protrusion.

4. The reflective unit as claimed in any of the preceding claims, further comprising an adhesive material (18) arranged between the fixing member (162, 262, 262a) and the reflective member (164, 264), said adhesive material (18) preferably being a double-sided tape.

5. The reflective unit as claimed in any of the preceding claims, wherein the fixing member (162, 262, 262a) and the light guiding element (14, 24) are one piece formed.

6. The reflective unit as claimed in any of the preceding claims, wherein the reflective member (164, 264) is a reflector, a filter, or a plastic or glass plate coated with resin.

7. A light source module (10, 10a, 20, 20a) comprising:
a light guiding element (14, 24, 24a) comprising a light guiding portion (142, 242), a light entrance portion (144,244) connecting to a side of the light guiding portion (142, 242) and a light exit portion (148, 248, 248a) connecting to another side of the light guiding portion (142, 242), the light exit portion (148, 248, 248a) having a plane (1481, 2481, 2481a) and a first concave portion (1482, 2482, 2482a) dented from the center of the plane (1481, 2481, 2481a) toward the light guiding portion (142, 242);
at least one light emitting element (12, 22) arranged at the light entrance portion (144, 244); and
a reflective unit (16, 26, 26a) comprising:
a fixing member (162, 262, 262a) arranged around the perimeter of the upper end of the light exit portion (148, 248, 248a),
a reflective member (164, 264) arranged on the fixing member (162, 264, 262a) for covering the first concave portion (1482, 2482, 2482a) and forming a conical-shaped light propagating space (19, 29).

8. The light source module as claimed in claim 7, wherein the fixing member (162, 262) comprising at least four protrusions (163a, 263a) arranged on the light exit portion (148, 248, 248a) at equal intervals.

9. The light source module as claimed in claim 7, wherein the fixing member (162, 262, 262a) is a ring-shaped protrusion.

10. The light source module as claimed in any of claims 7 to 9, wherein the reflective unit further comprises an adhesive material (18) arranged between the fixing member (162, 262, 262a) and the reflective member (164, 264), said adhesive material (18) preferably being a double-sided tape.

11. The light source module as claimed in any of claims 7 to 10, wherein the fixing member (162, 262, 262a) and the light guiding element (14, 24) are one piece formed.

12. The light source module as claimed in any of claims 7 to 11, wherein the diameter of the light entrance portion (144, 244) decreases as the distance from the light guiding portion (142, 242) increases.

13. The light source module as claimed in any of claims 7 to 12, further comprising a converging portion (146) connected between the light guiding portion (142, 242) and the light exit portion (148, 248, 248a), wherein the diameter of the converging portion (146) decreases as the distance from the light guiding portion (142, 242) increases.

14. The light source module as claimed in claim 13, wherein the diameter of the light exit portion (148, 248, 248a) increases as the distance from the converging portion (146) increases.

15. The light source module as claimed in any of claims 7 to 14, further comprising a bottom portion (150, 250) connected to a side of the light entrance portion (144, 244) opposite to the light guiding portion (142, 242), wherein the bottom portion (150, 250) comprises a plurality of the support members (1504, 2504).

16. The light source module as claimed in claim 15, further comprising an accommodating recess (1502, 2502) indented from the bottom portion (150, 250) toward the light exit portion (148, 248, 248a).

17. The light source module as claimed in any of claims 7 to 16, wherein the light exit portion (148, 248, 248a) further comprises a second concave portion (1486, 2486a) located at the center of the first concave portion (1482, 2482, 2482a), wherein the concave angle of the second concave portion (1486, 2486a) is smaller than the concave angle of the first concave portion (1482, 2482, 2482a).

18. The light source module as claimed in any of claims 7 to 17, wherein the reflective member (164, 264) is a reflector, a filter, or a plastic or glass plate coated with resin.
